# EUROPEAN PATENT APPLICATION

(11) **EP 3 492 672 A1**
(43) Date of publication of application: **05.06.2019**
(21) Application number: 17834504.7
(22) Date of filing: 27.07.2017
(51) Int. Cl.: E04G 23/02, C04B 41/60

(54) **CEILING REPAIR METHOD AND WALL REPAIR METHOD**

(30) Priority: 29.07.2016 JP 2016150662
(71) Applicant: Kogakuin University, Tokyo 163-8677 (JP)
(72) Inventor: GOTO, Osamu, Tokyo 163-8677 (JP); TAMURA Masaki, Tokyo 163-8677 (JP); MARUYAMA, Hiroaki, Tokyo 140-0014 (JP); YOKOSHIMA, Junichi, Yotukaido-shi Chiba 284-0033 (JP); ISHIZAKI, Koreyuki, Chiba-shi Chiba 262-0019 (JP)
(74) Representative: Nordmeyer, Philipp Werner
(86) International application number: PCT/JP2017/027341
(87) International publication number: WO 2018/021502

(57) **Abstract**

The present invention provides a method of repairing a plaster ceiling. The plaster ceiling to be repaired by the above described method includes: plates bridged across joists and spaced apart from each other; a ceiling base material finished with a masonry trowel over the lower surfaces of the plates; and a ceiling finishing material formed over the lower surface of the ceiling base material. The above described method includes the steps of: drilling an injection hole extending from the upper surface of the plate to the interface between the plate and the ceiling base material; injecting an acrylic resin composition containing: at least one monomer selected from an acrylic monomer or an methacrylic monomer; a thermosetting resin; and a curing agent; through the injection hole into the interface between the plate and the ceiling base material; and curing the acrylic resin composition so that the plate and the ceiling base material are adhered to each other. The invention also provides the use of the above described method.

## Description

### Technical Field

The present disclosure relates to a method of repairing a ceiling and a method of repairing a wall, which ceiling or wall is formed with a trowel finish and includes a finishing material layer on a surface thereof.

### Background Art

Traditional Japanese architecture often includes ceilings, walls and the like which are formed with a trowel finish using plaster, etc. A trowel-finished wall usually has a structure in which a base material, an intermediate coating material, and a surface material are formed in this order. Specifically, in general, a so-called "Komaishitaji", which is a base material formed by knitting bamboo strips or the like in the form of a lattice, is used as the base material of the wall. On one surface or both surfaces of the "Komaishitaji", clay, earth, or optionally, a mixture obtained by mixing into earth or clay, material(s) selected from the group consisting of straw, hemp fibers, "funori" (a glue used in Japan as a size for textiles), and slaked lime, etc., is applied in layers and finished with a masonry trowel, to form the intermediate coating material. Then plaster containing slaked lime and the like is applied in layers and finished with a masonry trowel, to form the surface material, thereby finishing the surface of the wall. The surface material is also referred to as a top coat material.

Plaster used in the surface material has an excellent water resistance, and is white and excellent in appearance. Thus, plaster has long been used widely as a surface material, particularly as a finishing material for walls, ceilings and the like.

Further, plaster is excellent in workability. Therefore, after forming a base material using plaster, namely, forming an under layer made of plaster, in a ceiling, a wall, or the like, plaster is further used as a finishing material, to provide a surface decoration. Examples of the surface decoration formed using plaster include: a decoration having surface irregularities, such as a relief sculpture formed with plaster; and a decoration in which a fresco painting is provided, formed by applying plaster as a finishing material, and painting a picture before the applied plaster as the finishing material is dried. In such a manner, plaster is used to provide a decoration on the surface of a ceiling, a wall, a pillar or the like, in a variety of forms.

However, the walls, ceilings and the like which are finished with a masonry trowel using plaster have poor elasticity. Therefore, damage may occur with the passage of time, as a result of shrinkage due to temperature changes, application of external stresses, such as earth quakes, and the like.

In Japan, many of western-style buildings which had been built since around the Meiji period (from 1868 to 1912) include decorative plaster ceilings, plaster walls and the like, in which plates arranged spaced apart from each other are used as a base, and plaster is used as a finishing material. A plate to be used as a base of a plaster ceiling is sometimes referred to as a "wood lath" in Japan.

In countries other than Japan, as well, there are many buildings including plaster ceilings, plaster walls and the like, in which the same or similar plates are used as a base, and plaster is used as a finishing material to provide relief sculptures and/or fresco paintings on the surfaces thereof.

For a case in which damage occurs in a building in which surface decorations are provided using plaster, a technique is needed which allows for repair and restoration of the building without greatly impairing historical values and decorative appearance thereof.

Conventionally, when deterioration or damage, such as, surface delamination, a crack, a cross sectional defect or flaking, occurs in a trowel-finished wall surface, for example, a plastering material having the same quality as the original material used for forming the flaking portion, namely, for example, clay, plaster, mortar or the like, is used to carry out a repair or reinforcement, in order to restore the wall to the same condition as that at the time of construction.

However, in a case in which the wall surface is repaired from the surface, difference in appearance, such as difference in color, may occur between the repaired portion and a portion which has not been repaired. As a result, the integrity of the wall surface as a whole cannot be maintained, possibly impairing the appearance.

In particular, in the case of a ceiling or wall surface in which irregularities such as a relief sculpture are formed or in which a fresco painting is provided, and when the ceiling or wall surface itself is an important cultural property, the following procedure has been done. Specifically, a site where deterioration is observed is removed and stored, and a replica which has been especially prepared to replace an original, genuine article is disposed at the original site. Thus, the conservation at the site of repair or restoration is difficult, in the present circumstances.

Conventionally, a cement composition has been proposed, as a repairing material which has a low cure shrinkage rate and which is used for repairing a damaged portion formed with a plastering material, etc. The above described cement composition contains: cement; an acrylic copolymer re-emulsified resin powder, surface coated with a water-soluble protective colloid of polyvinyl alcohol; an expanding material; and a shrinkage reducing agent (see Japanese Patent Application Laid-Open (JP-A) No. 2009-102216).

Further, as a method of repairing a mortar material, a technique for constructing a mortar-finished structure has been proposed, in which a mortar cured body is formed in a missing portion in a wall or the like, and after planarizing the surface, a polymer cement composition for waterproofing is used to cover the hydraulic mortar cured body, to provide a coated waterproof membrane (see JP-A No. 2010-18492).

Reinforcing a plaster ceiling is more difficult, because, in the plaster ceiling, a damaged surface faces downward with respect to the direction of gravity, and thus differs from the surface of a trowel-finished wall having a vertical surface. Accordingly, in a plaster ceiling, a filler such as mortar is used to repair a portion at which a crack is observed at an external surface. However, for a repair at a site with a risk of collapse, no coping method has been found at present, except for performing a repairing method such as: providing a plate or a net to a lower portion of the plaster ceiling; or using screws to fix the ceiling. Such a repairing method greatly impairs the appearance of a plaster ceiling to be repaired, and no fundamental solution to achieve the repair, reinforcement or the like of the plaster ceiling has been found in the present circumstances.

The present inventors have previously done studies on a method of repairing a ceiling or a wall using an acrylic resin cured body of a specific acrylic resin composition, as a method which allows for repairing a face, such as a ceiling or a wall, on site, and while further reducing an impact on the appearance (see Literature 1 "Tamura, et al., "Development of Maintenance and Conservation Methods for Historical Architecture using plaster wall materials, Part 4", PERORM, January, 2016, pp. 1-5").

### SUMMARY OF INVENTION

### Technical Problem

The composition disclosed in JP-A No. 2009-102216 is intended mainly for use in a construct including a mortar material. When the composition is used in a construct formed with a plastering material, it is possible to repair the surface of the construct, but an internal reinforcement cannot be provided. Further, an effect of the composition to prevent shrinkage, as a repairing material, is limited, and the problem that the difference in appearance occurs between the repaired portion and the portion before the repair has not yet been solved. Accordingly, it is difficult to use the above described composition for the purpose of repairing historical buildings and the like in which appearance is important.

Further, the technique disclosed in JP-ANo. 2010-18492 is a technique intended for use in a construct formed with a mortar material, and although the technique can be used for repairing cracks on the surface of a wall body or the like, it requires the application of a polymer cement composition on the surface. Accordingly, as with the technique disclosed in JP-ANo. 2009-102216, it is difficult use the above described technique for repairing a face which is finished by conventional plastering, from the viewpoint of appearance.

The method disclosed in the Literature 1 enables to markedly reduce deterioration in appearance on the surface of a plaster wall or the like. However, this method involves drilling an injection hole, although small, on the surface of a wall, a ceiling or the like to be repaired, and thus, there is room for an improvement, from the viewpoint of maintaining the appearance in a more favorable manner.

An object of one embodiment of the present invention is to provide a method of repairing a ceiling, wherein the method allows for repairing a portion having a reduced strength or the like, in a ceiling which is formed with a trowel finish and which includes on the surface thereof a finishing material layer formed with plaster, while minimizing the impact on the appearance.

An object of another embodiment of the invention is to provide a method of repairing a plaster wall, wherein the method allows for repairing a portion having a reduced strength or the like, in a wall which includes on the surface thereof a finishing material layer formed with plaster, while minimizing the impact on the appearance.

### Solution to Problem

Means for solving the above described problems include the following embodiments.
<1> A method of repairing a plaster ceiling having plates bridged across joists and spaced apart from each other, a ceiling base material applied to a surface formed from the plates with a masonry trowel from a bottom side, and a ceiling finishing material formed over a lower surface of the ceiling base material, the method comprising:
   drilling an injection hole extending from an upper surface of one of the plates to an interface between the one of the plates and the ceiling base material;
   injecting an acrylic resin composition containing at least one monomer selected from the group consisting of an acrylic monomer and a methacrylic monomer, a thermosetting resin, and a curing agent, through the injection hole into the interface between the one of the plates and the ceiling base material; and
   adhering the one of the plates and the ceiling base material by curing the acrylic resin composition.

In the first embodiment, which is described above, a cured body of the injected acrylic resin composition is formed between one of the plates and the ceiling base material, at a repaired site. The plates are structural materials in the ceiling, and the ceiling base material serves as a substrate for the ceiling finishing material having a decoration such as a relief sculpture. The presence of the thus formed cured body of the acrylic resin composition at the repaired site allows for a strong adhesion between the plate and the ceiling base material, and effectively prevents the collapse of the ceiling due to the delamination of the plates and the ceiling base material from the ceiling.

Since the cured body of the acrylic resin composition is present at the interface between the plate and the ceiling base material at the repaired site, it is possible to repair the damage in the ceiling and to provide reinforcement, without affecting a decorative surface of the ceiling finishing material. Further, a portion of the acrylic resin composition infiltrates into the interior of the ceiling base material, and the cured body of the acrylic resin which has infiltrated into the interior of the ceiling base material and cured thereat, serves as an anchor, thereby allowing for a stronger adhesion between the plates and the ceiling base material.

<2> A method of repairing a plaster ceiling having plates bridged across joists and spaced apart from each other, a ceiling base material applied to a surface formed from the plates with a masonry trowel from a bottom side, and a ceiling finishing material formed over a lower surface of the ceiling base material, the method comprising:
drilling an injection hole extending from an upper surface of one of the plates to an interface between the ceiling base material and the ceiling finishing material;
injecting an acrylic resin composition containing at least one monomer selected from the group consisting of an acrylic monomer and a methacrylic monomer, a thermosetting resin, and a curing agent, through the injection hole into the interface between the ceiling base material and the ceiling finishing material; and
adhering the ceiling base material and the ceiling finishing material by curing the acrylic resin composition.

In the second embodiment, which is described above, a cured body of the injected acrylic resin composition is formed at the interface between the ceiling base material and the ceiling finishing material. The ceiling base material is formed in close contact with the plates, which are structural materials in the ceiling, and includes penetrating portions extending through gaps between a plurality of the plates up to the upper surfaces of the plates; and the ceiling finishing material includes a decoration such as a relief sculpture. The presence of the cured body of the acrylic resin composition at the interface allows for a strong adhesion between the ceiling base material and the ceiling finishing material. Further, a portion of the acrylic resin composition infiltrates from the interface between the ceiling base material and the ceiling finishing material, into the interior of the ceiling base material and of the ceiling finishing material, to be cured thereat. The thus formed cured body of the acrylic resin composition provides an anchoring effect, thereby allowing for a stronger adhesion between the ceiling base material and the ceiling finishing material. Since the ceiling base material includes the penetrating portions extending up to the upper surfaces of the plates, as described above, the method according to the second embodiment enables to effectively prevent the collapse of the ceiling base material and the ceiling finishing material from the ceiling.

Although the cured body of the acrylic resin composition is formed in a state where the composition has partially infiltrated into the ceiling finishing material from the interface with the ceiling base material, there is no possibility that the acrylic resin composition infiltrates into the ceiling finishing material as deep as to cause a potential damage to the appearance of the surface of the ceiling finishing material. This is because the finishing material is formed such that the density of the material increases as it gets to closer to the surface. Accordingly, there is no risk that the cured body of the acrylic resin composition affects the decorative surface provided to the ceiling finishing material.

<3> A method of repairing a plaster ceiling having plates bridged across joists and spaced apart from each other, a ceiling base material applied to a surface formed from the plates with a masonry trowel from a bottom side and having a penetrating portion extending from a lower surface of one of the plates through a gap between a plurality of the plates up to an upper surface of the one of the plates, and a ceiling finishing material formed over a lower surface of the ceiling base material, the method comprising:
injecting an acrylic resin composition containing at least one monomer selected from the group consisting of an acrylic monomer and a methacrylic monomer, a thermosetting resin, and a curing agent, into an interface between the one of the plates and the ceiling base material, through a gap between a side face of the one of the plates and the ceiling base material that is stuffed in the gap between a plurality of the plates up to an upper surface of the plate; and
adhering the one of the plates and the ceiling base material by curing the acrylic resin composition.

The third embodiment, which is described above, can be referred to as a modification of the previously described first embodiment. In the present embodiment, cured bodies of the injected acrylic resin composition are formed between the plates, which are structural materials in the ceiling, and the ceiling base material, which serve as a substrate for the ceiling finishing material having a decoration such as a relief sculpture. The presence of the cured bodies of the acrylic resin allows for a strong adhesion between the plates and the ceiling base material, and effectively prevents the collapse of the ceiling due to the delamination of the plates and the ceiling base material from the ceiling. The above described effect is the same as that provided by the method according to the first embodiment.

In the present embodiment, the acrylic resin composition is injected through the gaps between the ceiling base material extending up to the upper surfaces of the plates and the side surfaces of plates, without forming an injection hole in one of the plates. By injecting the acrylic resin composition through the gaps which have been formed between the ceiling base material and the side surfaces of the plates, as a result of slight shrinkage of the ceiling base material due to the passage of time, the cured bodies of the acrylic resin composition are formed also between the side surfaces of the plates and the ceiling base material. Thus, the gaps formed between the plates and the ceiling base material are also filled with the cured bodies of the acrylic resin composition. Further, since there is no need to provide an injection hole in the plate and the ceiling base material, in the present embodiment, it is possible to allow for a stronger adhesion between the plates and the ceiling base material, including the regions of the gaps formed between the side surfaces of the plates and the ceiling base material, by a simpler means.

<4> A method of repairing a plaster ceiling having plates bridged across joists and spaced apart from each other, a wire mesh provided so as to extend across the plates, and a ceiling finishing material formed over a lower surface of the wire mesh, the method comprising:
applying an acrylic resin composition containing at least one monomer selected from the group consisting of an acrylic monomer and a methacrylic monomer, a thermosetting resin, and a curing agent, to the wire mesh from an upper side to introduce the acrylic resin composition into an interface between the wire mesh and the ceiling finishing material; and
adhering the wire mesh and the ceiling finishing material by curing the acrylic resin composition.

The fourth embodiment, which is described above, is an effective method of repairing a plaster ceiling including a wire mesh reinforcing material referred to as "lath". Such type of ceilings had been frequently formed in Japan around Meiji period. The "lath" is sometimes used to collectively refer to materials used as a base, in plaster ceilings and the like. The "lath" as used in the present specification refers to a wire mesh, which is a so-called "metal lath", used as a base reinforcing material in a plaster ceiling, a plaster wall, or the like.

The ceiling to be repaired by the method of the present embodiment includes: plates bridged across joists and spaced apart from each other; and a wire mesh provided so as to extend across the plates. Although the wire mesh is effective as a reinforcing material, there is a risk that wire mesh may corrode under the influence of moisture and the like, with the passage of time; in other words, there is a risk that the strength of the wire mesh may be decreased due to development of rust in the wire mesh.

In the present embodiment, the acrylic resin composition is applied on the upper surface of the wire mesh. The wire mesh has large pores, and thus, the applied acrylic resin composition is introduced into the interface between the wire mesh and the ceiling finishing material. When the acrylic resin composition is cured in that state, the resulting cured bodies of the acrylic resin composition include portions of the wire mesh therein, and are in contact with the ceiling finishing material. The presence of the cured bodies improves the adhesion between the wire mesh having a risk of a reduced strength and the ceiling finishing material, and effectively prevents the collapse of the ceiling due to the delamination between the wire mesh and the ceiling finishing material. Further, since the resulting cured bodies include therein the wire mesh having a reduced strength, the cured bodies of the acrylic resin composition themselves function as reinforcing materials. As a result, a situation in which the plaster ceiling collapses along with the wire mesh can also be prevented.

In addition, since the cured bodies of the acrylic resin composition are formed at the upper surface of the ceiling finishing material, in the present embodiment, the ceiling in which the wire mesh is deteriorated due to corrosion can be repaired, without a potential risk of affecting the decorative surface which is formed at the lower surface of the ceiling finishing material having a decoration.

It is to be noted, in the present specification, that a phenomenon in which a wire mesh develops rust on at least a portion thereof under the influence of moisture, acidic substances, and the like, or a metal structure of the wire mesh is damaged, etc., to result in a decrease in the strength of the wire mesh, is hereinafter sometimes referred to as "corrosion of a wire mesh".

<5> A method of repairing a plaster ceiling having plates bridged across joists and spaced apart from each other, a wire mesh provided so as to extend across the plates, and a ceiling finishing material formed over a lower surface of the wire mesh, the method comprising:
providing a new wire mesh so as to extend across upper surfaces of the plates;
applying an acrylic resin composition containing at least one monomer selected from the group consisting of an acrylic monomer and a methacrylic monomer, a thermosetting resin, and a curing agent, to an upper surface of the new wire mesh; and
adhering the new wire mesh, the wire mesh provided so as to extend across upper surfaces of the plates and the ceiling finishing material by curing the acrylic resin composition.

The fifth embodiment, which is described above, is also an effective method of repairing a plaster ceiling including a wire mesh reinforcing material referred to as "lath".

The ceiling to be repaired by the method of the present embodiment includes: plates bridged across joists and spaced apart from each other; and a wire mesh provided so as to extend across the plates. Although the wire mesh is effective as a reinforcing material, there is a risk that wire mesh may corrode under the influence of moisture and the like, with the passage of time, resulting in a decrease in the strength of the wire mesh.

The present embodiment includes the step of providing a new wire mesh so as to extend across the upper surfaces of the plates, in addition to the previously provided wire mesh. In general, the previously provided wire mesh is fixed to the plates from the lower surfaces of the plates. As a result of providing the new wire mesh so as to extend across the upper surfaces of the plates, a new reinforcing material having a high strength is additionally provided. When the acrylic resin composition is applied over the upper surface of the newly provided wire mesh, the applied acrylic resin composition passes through the pores of the newly provided wire mesh and the previously provided wire mesh, and is introduced into the interface between the previously provided wire mesh and the ceiling finishing material. By adjusting the amount to be applied of the acrylic resin composition, it is possible to allow the resulting cured bodies of the acrylic resin composition to include portions of the newly provided wire mesh and the previously provided wire mesh therein, and to be in contact with the ceiling finishing material.

As a result, respective components in a structure composed of the previously provided wire mesh having a risk of a reduced strength and the ceiling finishing material, further reinforced with the newly provided wire mesh, are adhered by the cured bodies of the acrylic resin composition. By including the newly provided wire mesh in the cured bodies, the collapse of the ceiling due to the delamination between the previously provided wire mesh and the ceiling finishing material can be further effectively prevented. Further, at the regions where the newly provided wire mesh is in contact with previously provided wire mesh and the ceiling finishing material, the newly provided wire mesh is present within the interior of the cured bodies of the acrylic resin composition, and thus less prone to be affected by moisture in the air and the like. Therefore, a situation in which the plaster ceiling collapses along with the wire mesh can also be prevented over a longer period of time.

Since the cured bodies of the acrylic resin composition are formed at the upper surface of the ceiling finishing material, in the present embodiment, as with the previously described fourth embodiment, it is possible to repair the ceiling in which the wire mesh is deteriorated, without a potential risk that the cured bodies of the acrylic resin composition affect the decorative surface which is formed at the lower surface of the ceiling finishing material having a decoration.

<6> A method of repairing a plaster wall, the method comprising:
drilling an injection hole at a site of the plaster wall to be repaired, which has: a base material; an intermediate coating material applied with a masonry trowel on the base material; and a surface material applied with a masonry trowel on the intermediate coating material, wherein the injection hole is extended from the base material through the intermediate coating material to an interface between the intermediate coating material and the surface material;
injecting an acrylic resin composition containing at least one monomer selected from the group consisting of an acrylic monomer and a methacrylic monomer, a thermosetting resin, and a curing agent, into the interface between the intermediate coating material and the surface material; and
adhering the interface between the intermediate coating material and the surface material by curing the acrylic resin composition.

The sixth embodiment, which is described above, relates to a method of repairing a wall (plaster wall) including a surface material having a decoration formed with plaster.

In the present embodiment, the injection hole for injecting the acrylic resin composition is formed from the side of the wall opposite to the surface material. In the present embodiment, it is preferable to detect the portion of the interface which needs to be repaired, more specifically, the portion of the interface between the intermediate coating material and the surface material at which a gap has been formed, in advance, and to drill the injection hole so as to extend to the detected portion of the interface. When the acrylic resin composition is injected into the portion of the interface at which the gap has been formed and an adhesion strength is reduced, the acrylic resin composition is filled into the gap and formed into a cured body of the acrylic resin composition thereat. In this manner, it is possible to achieve both filling the gap and improving the adhesion between the intermediate coating material and the surface material at the interface therebetween, at the same time.

In the present embodiment, the acrylic resin composition infiltrates into a portion of the plaster constituting the intermediate coating material and the surface material to exhibit an anchoring effect, thereby enabling to provide a robust repair. Further, there is no risk that the acrylic resin composition which has infiltrated into the surface material from the side thereof in contact with the intermediate coating material, infiltrates as far as to reach the surface of the surface material provided with a decoration. Therefore, it is possible to reinforce the plaster wall, without a potential risk that the resulting cured body of the acrylic resin composition affect the decoration provided on the surface.

### Advantageous Effects of Invention

One embodiment of the invention provides a method of repairing a ceiling, wherein the method allows for repairing a portion having a reduced strength or the like, in a ceiling which is formed with a trowel finish and which includes on the surface thereof a finishing material layer formed with plaster, while minimizing the impact on the appearance. Another embodiment of the invention provides a method of repairing a plaster wall, wherein the method allows for repairing a portion having a reduced strength or the like, in a wall which includes on the surface thereof a finishing material layer formed with plaster, while minimizing the impact on the appearance.

### BRIEF DESCRIPTION OF DRAWINGS

FIG. 1 is a schematic sectional view showing a portion of one embodiment of a ceiling which has been repaired by the method according to the first embodiment, and which includes a cured body of an acrylic resin composition formed at the interface between a plate and a ceiling base material.
FIG. 2 is a schematic sectional view showing a portion of one embodiment of a ceiling which has been repaired by the method according to the second embodiment, and which includes a cured body of the acrylic resin composition formed at the interface between the ceiling base material and a ceiling finishing material.
FIG. 3 is a schematic sectional view showing a portion of one embodiment of a ceiling which has been repaired by the method according to the third embodiment, and which includes cured bodies of the acrylic resin composition formed at the interface between the plates and the ceiling base material, and between the side surfaces of the plates and the ceiling base material.
FIG. 4A is a schematic sectional view showing a portion of one embodiment of a ceiling which has been repaired by the method according to the fourth embodiment, and which includes cured bodies of the acrylic resin composition formed to include the regions of a wire mesh.
FIG. 4B is a plan view showing a portion of one embodiment of the wire mesh used in the fourth embodiment.
FIG. 5 is a schematic sectional view showing a portion of one embodiment of a ceiling which has been repaired by the method according to the fifth embodiment, and which includes cured bodies of the acrylic resin composition formed to include the regions of a newly provided wire mesh and the previously provided wire mesh.
FIG. 6 is a schematic sectional view showing a portion of one embodiment of a wall which has been repaired by the method according to the sixth embodiment, and which includes a cured body of the acrylic resin composition formed at the interface between a base material and a finishing material.

### DESCRIPTION OF EMBODIMENTS

First, the methods of repairing a ceiling according to the embodiments of the present invention will be described with reference to drawings.

In each of the drawings, the same reference numerals are used to refer to the same components.

In the present specification, the definition of a "wall or ceiling finished with a masonry trowel" or a "wall or ceiling formed with a trowel finish" encompasses any structure finished by hand using a masonry trowel, such as an earthen wall, a plaster wall, a mortar wall, a plaster ceiling, a mortar ceiling, or the like.

A masonry trowel is a tool used for applying plaster or the like, or planarizing the surface applied therewith for finishing. In general, a masonry trowel has a form in which a wooden handle is attached to a metal plate, such as an iron plate. The expression "to form with a 'trowel finish'" or to "finish with a masonry trowel" refers to planarizing, or to providing a decoration having irregularities on, the surface of a surface material containing plaster, mortar or the like, using a masonry trowel.

Further, in the present specification, the definition of the term "ceiling finishing material" or "surface material" of a wall encompasses any surface material to be provided to a ceiling or a wall, which has a surface on which a three dimensional decoration such as a relief sculpture is formed with plaster, or a plaster surface on which a painting, a pattern or the like is provided.

### [Method of Repairing Ceiling According to First Embodiment]

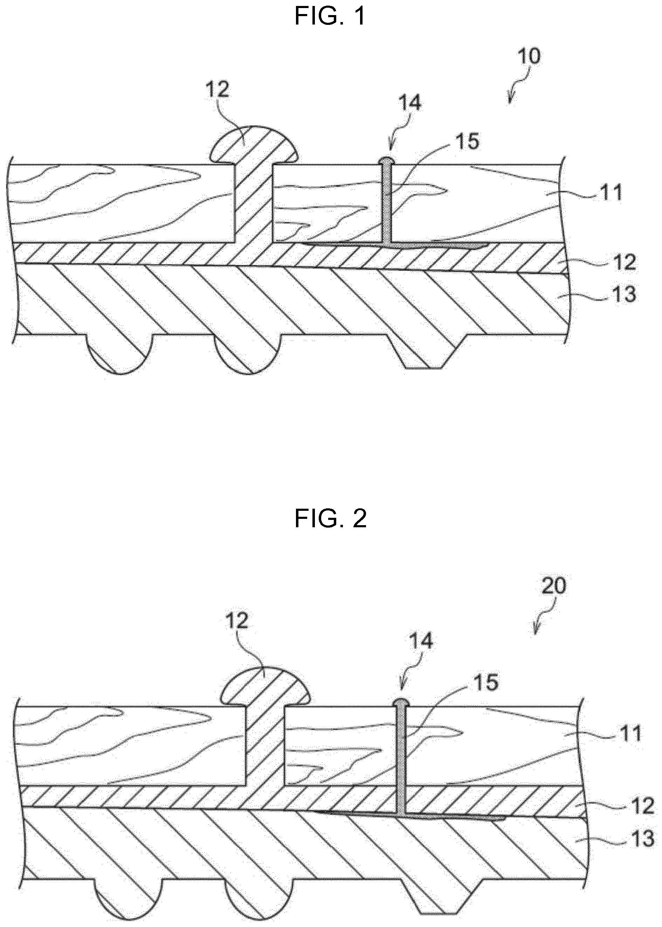

FIG. 1 is a schematic sectional view showing a portion of one embodiment of a plaster ceiling 10 (hereinafter, sometimes referred to as a ceiling 10) which has been repaired by the method of repairing a ceiling according to the first embodiment, and which includes a cured body 15 of an acrylic resin composition formed at the interface between one of plates 11 and a ceiling base material 12.

The method of repairing a plaster ceiling according to the first embodiment is a method of repairing the plaster ceiling 10, which includes: the plates 11 bridged across joists and spaced apart from each other; the ceiling base material 12 finished with a masonry trowel over the lower surfaces of the plates 11; and a ceiling finishing material 13 formed over the lower surface of the ceiling base material 12.

First, an injection hole 14 which extends from the upper surface of the plate 11 to the interface between the plate 11 and the ceiling base material 12 is drilled. Subsequently, the acrylic resin composition is injected through the injection hole 14 into the interface between the plate 11 and the ceiling base material 12.

The thus injected acrylic resin composition is cured to form the cured body 15 of the acrylic resin composition, so that the plate 11 and the ceiling base material 12 are adhered to each other via the cured body 15.

When drilling the injection hole, it is preferred to detect the portion of the interface at which a gap has been formed, in advance, and to determine a drilling depth of the injection hole, accordingly.

The portion of the interface at which a gap has been formed can be detected, for example, by: a method in which preliminary drilling is carried out at a site to be repaired; a method in which a tapping rod such as one used for detecting the delamination of tiles and the like is used to determine the portion at which floating of the base material has occurred, namely, the portion at which a gap has been formed, based on the dullness of a sound in response to the tapping; or a method in which the portion at which floating has occurred is detected based on the degree of decrease in rebound velocity ratio which is measured as the ratio of a reflected wave to an incident wave by a tapping sound.

By detecting the position of the interface at which a gap has been formed, in advance, according to the previously described method, and inserting a needle into the gap portion between the base material and plaster, it is possible to measure the thickness of the base material, and to determine the drilling depth of the injection hole.

The detection of the portion of the interface at which a gap has been formed in advance enables to carry out an efficient repair.

Since the shrinkage rate due to changes in temperature and humidity differs between the plates 11, and the ceiling base material 12 which is formed with a trowel finish using plaster or the like, an embodiment is also preferred in which the acrylic resin composition is injected into the interface between the plates 11 and the ceiling base material 12, first, so as to fill the acrylic resin composition into gaps formed due to the difference in the shrinkage rate.

The acrylic resin composition injected into the injection hole 14 flows through the injection hole 14 to reach the gap between the plate 11 and the ceiling base material 12, and fills the gap space. Thereafter, a portion of the acrylic resin composition infiltrates into voids between plaster particles included in the ceiling base material 12. Subsequently, the infiltrated acrylic resin composition is cured to form the cured body 15 of the acrylic resin composition.

The thus formed cured body 15 of the acrylic resin composition enables the adhesion between the plate 11 and the ceiling base material 12 at the interface therebetween, and serves as an anchor to the ceiling base material 12. This allows for a strong adhesion between the plates 11 and the ceiling base material 12, and prevents the delamination of the ceiling 10, particularly, the collapse of the ceiling 10 which occurs as a result of the ceiling base material 12 and the ceiling finishing material 13 delaminated and falls off from the plates 11.

### (Step of Drilling Injection Hole)

The drilling of the injection hole 14 can be carried out by an ordinary method. In the case of drilling the injection hole to one of the plates 11, it is possible to use a known drilling method, such as a method using a drill.

The drill to be used for drilling is preferably a rotary drill whose number of revolution can be controlled depending on the strength of the material to be drilled, such as the plates 11, and the ceiling base material 12 to be described later, namely, a resistance during the drilling. By means, such as using the rotary drill whose number of revolution can be controlled, it is possible to prevent the adhesion of components around the injection hole 14 to be formed by the drilling, thereby enabling to carry out the drilling without damaging the ceiling base material, ceiling finishing material and the like.

After the formation of the injection hole 14, it is preferred to properly clean the interior of the injection hole 14 to remove machining chips, machining powder and the like generated inside the injection hole 14 during the drilling, from the viewpoint of improving the infiltrability of the acrylic resin composition. The interior of the injection hole 14 can be cleaned using a simple air dropper, by a method of blowing off the machining chips or machining powder, or the like.

By adjusting the drilling depth of the injection hole 14, it is possible to determine the site to be repaired. In the first embodiment, the injection hole 14 is formed to a depth sufficient to penetrate the plate 11.

When the depth of the injection hole 14 is adjusted to a depth sufficient to penetrate the plate 11, it is possible to allow the acrylic resin composition to infiltrate into the gap between the plate 11 and the ceiling base material 12, and to firmly fix the plate 11 and the ceiling base material 12 to each other, by the cured body 15 of the acrylic resin composition formed by curing the infiltrated composition.

After allowing the acrylic resin composition to infiltrate into the gap formed at the interface between the plate 11 and the ceiling base material 12, through the injection hole 14, the acrylic resin composition is cured to form the cured body 15.

The acrylic resin composition usually cures in a curing time of about one hour to two hours, and the composition quickly cures to form the cured body 15 of the acrylic resin composition. The curing time can be adjusted from about 30 minutes to seven days, depending on the type and the amount to be added of a curing agent, a delaying agent and the like contained in the acrylic resin composition.

### (Acrylic Resin Composition)

The acrylic resin composition to be used for forming a cured body of the acrylic resin composition in the repairing method according to the present disclosure is preferably an acrylic resin composition containing one or more monomers selected from the group consisting of acrylic monomers and methacrylic monomers, from the viewpoint of infiltrability.

In the present specification, the term "(meth)acrylic" is sometimes used to refer to either or both of "acrylic" and/or "methacrylic", and the term "(meth)acrylate" is sometimes used to refer to either or both of "acrylate" and/or "methacrylate".

Examples of a preferred acrylic resin composition to be used in the repairing method according to the present disclosure include an acrylic resin composition containing a (meth)acrylic monomer, a thermosetting resin, and a curing agent.

The acrylic resin composition preferably has a viscosity at normal temperature (25°C) within a range of from 80 mPa·s to 100 mPa·s, from the viewpoint of achieving a favorable infiltrability into the ceiling base material 12 and the ceiling finishing material 13. The viscosity of the acrylic resin composition can be measured by a method in accordance with JIS K6833-1 (2008) at normal temperature (25°C), using a Type-B viscosity meter.

When the acrylic resin composition has a viscosity within the above described range, the acrylic resin quickly infiltrates into a gap between the plate 11 and the ceiling base material 12, a gap between the ceiling base material 12 and the ceiling finishing material 13, etc. Further, a portion of the acrylic resin composition naturally infiltrates into the interior of the ceiling base material 12, the ceiling finishing material 13, etc., for example, into the voids between clay particles, fine cracks having a size of about 0.05 mm, and the like, under the condition of atmospheric pressure.

It is preferred that the acrylic resin composition contains, as an acrylic monomer which is a main component of the composition, at least one selected from an acrylate monomer or a methacrylate monomer. The (meth)acrylic monomer may be modified.

Preferred examples of the (meth)acrylic monomer include dicyclopentenyloxyethylene methacrylate, and methoxypolyethylene glycol #900 methacrylate.

It is also possible to use a commercially available product of the (meth)acrylate monomer, and examples thereof include a rebuilt resin, REBUILT 300 (brand name; dicyclopentenyloxyethylene methacrylate, manufactured by Fukuda Jitsugyo Co., Ltd.), and NK-ESTER M-20G (brand name; methoxypolyethylene glycol #900 methacrylate, manufactured by Shin Nakamura Chemical Co., Ltd.).

The content of the (meth)acrylic monomer with respect to the total amount of the acrylic resin composition is preferably within the range of from 80% by mass to 90% by mass, and more preferably within the range of from 83% by mass to 88% by mass.

The acrylic resin composition may further contain (meth)acrylic resin particles to the extent that a flowability of the composition is not impaired.

The acrylic resin composition contains, in addition to the (meth)acrylic monomer, a thermosetting resin which is useful for forming a cured body having a high strength, and a curing agent which allows the thermosetting resin to be cured.

Examples of the thermosetting resin include epoxy resins, urethane resins, silicone resins, urea resins, and phenol resins.

The content of the thermosetting resin with respect to the total amount of the acrylic resin composition is preferably within the range of from 10% by mass to 20% by mass, and more preferably within the range of from 12% by mass to 16% by mass.

Preferred examples of the curing agent which allows the thermosetting resin to be cured include organic peroxides such as ketone peroxides, diacyl peroxides, dialkyl peroxides, and peroxy esters.

The type and the content of the curing agent can be selected as appropriate depending on the type and the content of the thermosetting resin to be used.

The acrylic resin composition has a favorable flowability even without containing a solvent, because the (meth)acrylic monomer is in the form of a liquid. Therefore, the acrylic resin composition has a lower volume shrinkage upon curing, as compared to a resin composition obtained by dissolving a resin in a solvent, and thus is preferably used in the repairing method according to the present disclosure.

The acrylic resin composition may contain any of other components as additives in order to adjust the flowability, curability, and the like, to the extent that the effect of the invention is not impaired.

Examples of the additive include: a chloroprene rubber as a softening agent; inorganic particles as a viscosity modifier, such as AEROSIL; an alkyl phenol as a delaying agent; and naphthene cobalt as an accelerator.

A commercially available product may also be used as the acrylic resin composition. Examples of the commercially available product thereof include SHINTO JUST (brand name) manufactured by Just Co., Ltd. There were cases in which SHINTO JUST was used as a material for repairing cracks in a concrete cured body, or for forming a rust preventive film for a metal; however, no case is known in which SHINTO JUST was used in a method of repairing a plaster ceiling or a plaster wall having a decoration, without impairing the appearance thereof.

### [Method of Repairing Ceiling According to Second Embodiment]

FIG. 2 is a schematic sectional view showing a portion of one embodiment of a plaster ceiling 20 (hereinafter, sometimes referred to as a ceiling 20) which has been repaired by the method of repairing a ceiling according to the second embodiment, and which includes a cured body 15 of the acrylic resin composition formed at the interface between the ceiling base material 12 and the ceiling finishing material 13.

As with the method of repairing a ceiling according to the first embodiment, the method of repairing a plaster ceiling according to the second embodiment is a method of repairing the plaster ceiling 10, which includes: the plates 11 bridged across joists and spaced apart from each other; the ceiling base material 12 finished with a masonry trowel over the lower surfaces of the plates 11; and the ceiling finishing material 13 formed over the lower surface of the ceiling base material 12.

In the second embodiment, an injection hole 14 is formed so as to penetrate the plate 11 and the ceiling base material 12, and the injection hole 14 is formed to a depth extending to the interface between the ceiling base material 12 and the ceiling finishing material 13.

When the depth of the injection hole 14 is adjusted to a depth sufficient to penetrate the plate 11 and the ceiling base material 12, it is possible to allow the acrylic resin composition to infiltrate into the gap between the ceiling base material 12 and the ceiling finishing material 13, and to firmly fix the ceiling base material 12 and the ceiling finishing material 13 to each other, by the cured body 15 of the acrylic resin composition, which is a cured body of the infiltrated acrylic resin composition.

The method of forming the injection hole 14 is the same as the method used in the previously described first embodiment.

The method according to the second embodiment allows for effectively preventing the collapse of the ceiling base material 12 and the ceiling finishing material 13 from the ceiling 20. Further, the cured body 15 of the acrylic resin composition is formed in a state where the composition has partially infiltrated into the ceiling base material 12 and the ceiling finishing material 13 from the interface between the ceiling base material 12 and the ceiling finishing material 13. This provides an anchoring effect which allows for a strong adhesion between the ceiling base material 12 and the ceiling finishing material 13. Since the ceiling finishing material 13 is usually formed so that the density of the material increases as it gets closer to the surface, there is no possibility that the acrylic resin composition infiltrates into the ceiling finishing material 13 as deep as to cause a potential damage to the appearance of the surface of the ceiling finishing material 13. Therefore, there is no risk that the cured body of the acrylic resin composition has an impact on the appearance of the decorative surface provided to the ceiling finishing material 13.

The repairing method according to the second embodiment can be carried out in the same manner as the repairing method according to the first embodiment previously described, except that the injection hole 14 is formed to a different drilling depth.

### [Repairing Method According to Third Embodiment]

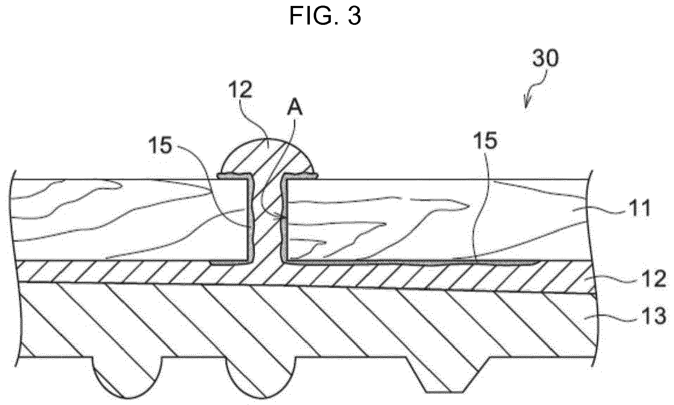

FIG. 3 is a schematic sectional view showing a portion of one embodiment of a plaster ceiling 30 (hereinafter, sometimes referred to as a ceiling 30) which has been repaired by the repairing method according to the third embodiment, and which includes cured bodies 15 of the acrylic resin composition formed at the interface between the plates 11 and the ceiling base material 12, and between the side surfaces of the plates 11 and the ceiling base material 12.

The present embodiment is a modification of the previously described first embodiment.

In the present embodiment, the acrylic resin is injected between the plates 11, which are structural materials in the ceiling 30, and the ceiling base material 12, which serve as a substrate for the ceiling finishing material 13 having a decoration such as a relief sculpture, and cured to form the cured bodies 15 of the acrylic resin composition therebetween. The thus formed cured bodies 15 allow for a strong adhesion between the plates 11 and the ceiling base material 12.

In the present embodiment, the acrylic resin composition is injected through gaps A between the ceiling base material 12 extending up to the upper surfaces of the plates 11, and the side surfaces of the plates 11, as shown in FIG. 3, without forming an injection hole in one of the plates 11. By injecting the acrylic resin composition through the gaps A, which have been formed between the ceiling base material 12 and the side surfaces of the plates 11 as a result of a slight shrinkage of the ceiling base material 12, the cured bodies 15 of the acrylic resin composition are formed also between the side surfaces of the plates 11 and the ceiling base material 12. As a result, the gaps A formed between the plates 11 and the ceiling base material 12 are also filled with the cured bodies 15 of the acrylic resin composition.

Since there is no need to provide an injection hole in the plate 11 and the ceiling base material 12, in the present embodiment, it is possible to allow for a stronger adhesion between the plates 11 and the ceiling base material 12, including the regions of the gaps A formed at the side surfaces of the plates 11, by a simpler means.

The repairing method according to the third embodiment can be carried out in the same manner as the repairing method according to the first embodiment previously described, except that the injection hole 14 is not provided, and the acrylic resin composition is injected into the gaps A formed between the side surfaces of the plates 11 and the ceiling base material 12.

### [Repairing Method According to Fourth Embodiment]

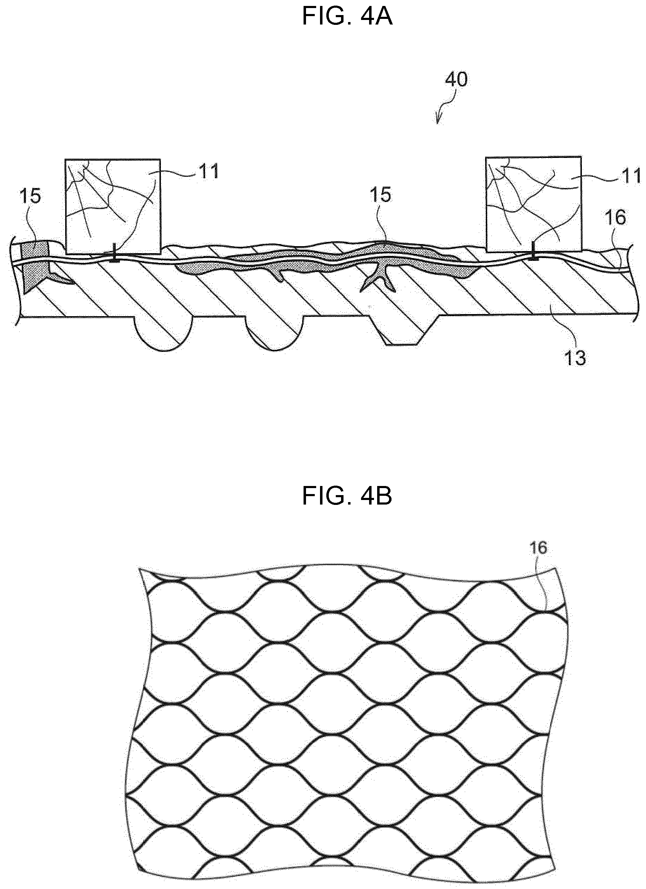

FIG. 4A is a schematic sectional view showing a portion of one embodiment of a plaster ceiling (ceiling) 40, which has been repaired by the repairing method according to the fourth embodiment, and which includes cured bodies 15 of the acrylic resin composition, formed to include the regions of a wire mesh 16 as a reinforcing material. FIG. 4B is a plan view showing a portion of one embodiment of the wire mesh 16 used in the fourth embodiment.

The present embodiment is a method of repairing the plaster ceiling 40 (hereinafter, sometimes referred to as a ceiling 40), which includes plates 11 bridged across joists and spaced apart from each other; the wire mesh 16 provided so as to extend across the plates 11; and a ceiling finishing material 13 finished with a masonry trowel over the lower surface of the wire mesh 16. The present method is a method of repairing a plaster ceiling including the steps of: applying the acrylic resin composition over the upper surface of the wire mesh 16, so that the acrylic resin composition is introduced into the interface between the wire mesh 16 and the ceiling finishing material 13; and curing the acrylic resin composition so that the wire mesh 16 and the ceiling finishing material 13 are adhered to each other, by the cured bodies of the acrylic resin composition.

The present embodiment is an effective method of repairing the plaster ceiling 40 which includes the wire mesh 16 as a reinforcing material.

As shown in FIG. 4A, the wire mesh 16 is usually fixed to the lower surfaces of the plates 11.

The ceiling 40, which is a subject to be repaired by the method of the present embodiment, includes the wire mesh 16 provided so as to extend across the plates 11. In the present embodiment, the acrylic resin composition is applied over the upper surface of the wire mesh 16. The wire mesh has large pores, and thus, the applied acrylic resin composition is introduced into the interface between the wire mesh 16 and the ceiling finishing material 13. When the thus introduced acrylic resin composition is cured, the cured bodies 15 of the acrylic resin composition, which include portions of the wire mesh 16 and which are in contact with the ceiling finishing material 13 over large areas, are formed over a wide region.

Accordingly, the adhesion between the wire mesh 16 having a risk of a reduced strength and the ceiling finishing material 13 is improved, and the collapse of the ceiling 40 due to the delamination between the wire mesh 16 and the ceiling finishing material 13 is effectively prevented. Further, when the cured bodies 15 including the wire mesh 16 having a reduced strength are formed, the cured bodies 15 of the acrylic resin composition themselves function as reinforcing materials. As a result, a situation in which the plaster ceiling 40 collapses along with the wire mesh 16 can be also prevented.

Since the cured bodies of the acrylic resin composition are formed at the upper surface of the ceiling base material, in the present embodiment, it is possible to repair the ceiling in which the wire mesh is deteriorated, without a potential risk of affecting the decorative surface which is formed at the lower surface of the ceiling finishing material having a decoration.

### [Repairing Method According to Fifth Embodiment]

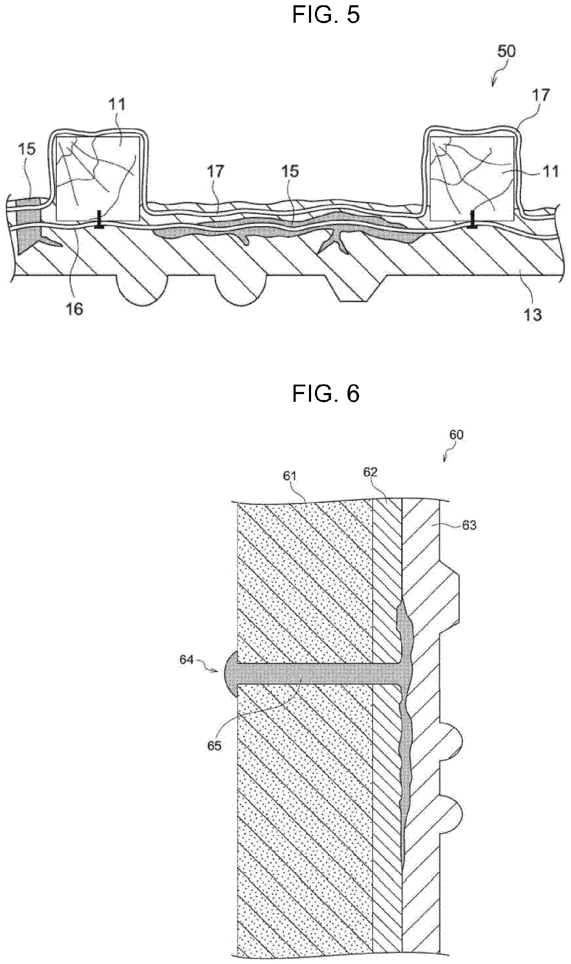

FIG. 5 is a schematic sectional view showing a portion of one embodiment of a plaster ceiling 50 (hereinafter, sometimes referred to as a ceiling 50) which has been repaired by the repairing method according to the fifth embodiment, and which includes cured bodies 15 of the acrylic resin composition formed to include the regions of a newly provided wire mesh 17 and the previously provided wire mesh 16.

The above described fifth embodiment is also a method of effectively repairing a plaster ceiling which includes, as with the previously described fourth embodiment, the wire mesh 16 as a reinforcing material referred to as "lath".

The ceiling 50, which is a subject to be repaired by the method of the present embodiment, includes the plates 11 bridged across joists and spaced apart from each other; and the wire mesh 16 provided so as to extend across the plates 11. The repairing method of the present embodiment includes the step of providing the new wire mesh 17 so as to extend across the upper surfaces of plates 11, in addition to the previously provided wire mesh 16.

In general, the previously provided wire mesh 16 is fixed to the plates 11 from the lower surfaces of the plates 11. By providing the new wire mesh 17 so as to extend across the upper surfaces of the plates 11, the wire mesh 17, which is a new reinforcing material having a high strength, is additionally provided. When the acrylic resin composition is applied over the upper surface of the newly provided wire mesh 17, the applied acrylic resin composition passes through the pores of the newly provided wire mesh 17, and the previously provided wire mesh 16, and is introduced into the interface between the previously provided wire mesh 16 and the ceiling finishing material 13.

By adjusting the amount to be applied of the acrylic resin composition, it is possible to allow the resulting cured bodies 15 of the acrylic resin composition to include portions of the newly provided wire mesh 17 and the previously provided wire mesh 16 therein, and to be in contact with the ceiling finishing material 13. As a result, respective components in a structure composed of the previously provided wire mesh 16 having a risk of a reduced strength and the ceiling finishing material 13, further reinforced with the newly provided wire mesh 17, are adhered by the cured bodies 15 of the acrylic resin composition, thereby allowing for a robust repair.

By forming the cured bodies 15 including the newly provided wire mesh 17, the collapse of the ceiling due to the delamination between the previously provided wire mesh 16 and the ceiling finishing material 13 can be further effectively prevented. Further, when the cured bodies 15 including the newly provided wire mesh 17 are formed, the newly provided wire mesh 17 is present within the interior of the cured bodies 15 of the acrylic resin composition, at the regions where the wire mesh 17 is in contact with the previously provided wire mesh 16 and the ceiling finishing material 13. This makes the wire mesh 17 less prone to be affected by moisture in the air and the like, thereby enabling to prevent a situation in which the plaster ceiling 50 collapses, over a longer period of time.

Since the cured bodies 15 of the acrylic resin composition are formed at the upper surface of the ceiling finishing material 13, in the present embodiment, as with the previously described fourth embodiment, there is no risk that the cured bodies 15 of the acrylic resin composition affect the appearance of the decorative surface which is formed at the lower surface of the ceiling finishing material 13 having a decoration.

### [Repairing Method According to Sixth Embodiment]

FIG. 6 is a schematic sectional view showing a portion of one embodiment of a plaster wall 60 (hereinafter, sometimes referred to as a wall 60) which has been repaired by the repairing method according to the sixth embodiment, and which includes a cured body 65 of the acrylic resin composition formed at the interface between an intermediate coating material 62 and a finishing material 63.

The present embodiment relates to a method of repairing the wall 60 having a decoration. The wall 60 includes: a base material 61; the intermediate coating material 62 finished with a masonry trowel on the base material 61; and the surface material 63 finished with a masonry trowel on the intermediate coating material 62. The present method is a method of repairing a plaster wall, including the steps of: drilling an injection hole 64 extending to the interface between the intermediate coating material 62 and the surface material 63, to the site of the plaster wall 60 to be repaired, from the side of the base material 61; injecting the previously described acrylic resin composition through the injection hole 64 into the interface between the intermediate coating material 62 and the surface material 63; and curing the acrylic resin composition to form the cured body 65 of the acrylic resin composition, so that the intermediate coating material 62 and the surface material 63 are adhered to each other at the interface therebetween.

The method according to the sixth embodiment is suitable for repairing the wall 60 including the surface material having a decoration formed with plaster.

In the present embodiment, the injection hole 64 for injecting the acrylic resin composition is formed from the side of the wall 60 opposite to the surface material 63. In the present embodiment, it is preferable to detect the portion of the interface which needs to be repaired, more specifically, the portion of the interface between the intermediate coating material 62 and the surface material 63 at which a gap has been formed, in advance, and to drill the injection hole 64 so as to extend to the detected portion of the interface.

In order to detect the portion of the interface at which a gap has been formed, it is possible to use the same method as the method described in the first embodiment, for detecting a gap formed at the interface in the ceiling.

When the acrylic resin composition is injected into the portion of the interface between the intermediate coating material 62 and the surface material 63, at which a gap has been formed and the adhesion strength is reduced, the acrylic resin composition is filled into the interface, and formed into the cured body 65 of the acrylic resin composition thereat. In this manner, it is possible to achieve both filling the gap and improving the adhesion between the intermediate coating material 62 and the surface material 63 at the interface therebetween, at the same time.

In the present embodiment, the acrylic resin composition infiltrates into a portion of the plaster constituting the intermediate coating material 62 and the surface material 63 to exhibit an anchoring effect, thereby enabling to provide a robust repair. Further, since the surface material 63 is formed such that the density of the material increases as it gets closer to the decorative surface, there is no risk that the acrylic resin composition which has infiltrated into the surface material 63 from the side thereof in contact with the intermediate coating material 62, infiltrates as far as to reach the dense surface of the surface material 63 provided with a decoration. Therefore, it is possible to reinforce the wall 60 provided with a decoration, without affecting the decoration provided on the surface.

### EXAMPLES

The repairing methods according to the present disclosure will now be described in detail, with reference to Examples. However, each of the following Examples is merely one embodiment of the repairing method according to the present disclosure, and the present invention is in no way limited to these examples. Further, a variety of modifications of the methods are possible.

### (1) Example 1

### [Preparation of Plaster Ceiling Material Test Specimens]

First, a ceiling for carrying out the repair according to the present embodiment is prepared.

A wooden frame corresponding to a structure material was formed, and four pieces of the plates 11 were bridged to extend in one direction of the wooden frame, so as to be in parallel with and spaced apart from each other, assuming that the wooden frame is a joist.

The ceiling base material 12 was finished with a masonry trowel over the lower surfaces of the plates 11. The plaster for forming the ceiling base material 12 was provided so as to protrude from between the adjacent plates 11 above the upper surfaces of the plates 11. In this manner, biting portions of the ceiling base material 12 protruding above the upper surfaces of the plates 11 were formed, as shown in FIG. 1. Then the ceiling finishing material 13 was formed with a trowel finish over the lower surface of the ceiling base material 12, and irregularities were formed on the surface of the ceiling finishing material 13 with a masonry trowel, as shown in FIG. 1, to provide a decorative surface.

The ceiling base material 12 and the ceiling finishing material 13 were both formed with plaster. In this manner, each of a plurality of test bodies was prepared.

The details of the plaster used in the formation of each test body are shown below.

### (Plaster Material Used for Forming Ceiling Base Material 12)

The materials used are tap water, slaked lime, straw fibers for plastering (hereinafter, also simply referred to as "straw fibers") treated to remove harshness, and the like.

As the plates 11, wood lath bases of rough cedar wood (thickness: 12 mm, width 40: mm) were used.

The composition of the plaster for forming the ceiling base material is such that the ratio of water and slaked lime was 85% by mass, and the content of sand was 0% by mass.

The content of the straw fibers was adjusted to 0% by volume, 2% by volume, or 4% by volume with respect to volume of the test body.

The above described components were mixed, and water was added to a total of 100% by mass, taking into account the mass of the straw fibers corresponding to the above described volume, to prepare a plaster material for forming the ceiling base material 12.

The "straw fibers" are a material obtained by cutting straw such as rice straw into a size of about from 5 mm to 6 cm. The straw fibers are mixed into plaster or the like, and used as a reinforcing material or a filler. The "straw fibers treated to remove harshness" (hereinafter, also simply referred to as "lye-treated straw fibers") refer to straw fibers which have been dipped in water or lye, followed by drying.

The "rough cedar wood" refers to a plate of cedar, obtained by: removing the bark from a cedar log material, which is used as a shaft material for use as a pillar or the like; and cutting into strips peripheral end material portions, which are obtained after cutting out a pillar material from the central portion of the log material; which plate has not yet been subjected to surface finishing with a plane or the like.

### (Plaster Material Used for Forming Ceiling Finishing Material 13)

The materials used are tap water, slaked lime, fine aggregates for plastering (sand), lye-treated straw fibers, and the like.

The composition of the plaster was such that the ratio of water and slaked lime was 85% by mass, the content of sand was 20% by mass, and the content of straw fibers was 0% by volume, 2% by volume, or 4% by volume with respect to the volume of the test body.

Thereafter, the above described components were mixed, in the same manner as in the preparation of the plaster material used for forming the ceiling base material 12, and water was added to a total of 100% by mass, to prepare a plaster material for forming the ceiling finishing material 13.

### (Drilling of Injection Hole)

To one of the plates 11 in each resulting test body, the injection hole 14 having a diameter of from 5 mm to 10 mm was drilled using an electric drill.

The injection hole 14 was formed in a depth sufficient to penetrate the plate 11 and to reach the ceiling base material 12. A gap was experimentally formed between the plate 11 and the ceiling base material 12.

### (Injection of Acrylic Resin Composition and Preparation of Cured Body of Acrylic Resin)

Into the thus drilled injection hole 14, an acrylic resin composition [an infiltrative acrylic resin, SHINTO JUST (brand name), manufactured by Just Co., Ltd.] was injected using a syringe.

The acrylic resin composition was injected into the injection hole 14 in such an amount that the interior of the injection hole 14, and the gap formed between the plate 11 and the ceiling base material 12 were both filled with the acrylic resin composition.

The thus formed gap had local variations in thickness, which were within the range of from more than 0 mm but equal to or less than 2 mm.

The thickness of the gap in Example 1 was determined by cutting one of the plurality of test bodies in a direction vertical to a surface direction, and observing the resulting cross section to carry out a measurement.

According to the repairing method of the present embodiment, the acrylic resin composition infiltrates even into a portion at which the plate 11 and the ceiling base material 12 are not completely adhered to each other and a slight gap of more than 0 mm was formed, and is cured thereat; and the thus formed cured body of the acrylic resin composition serves to provide reinforcement.

When injecting the acrylic resin composition, it is possible to inject an intended amount of resin, by injecting the composition multiple times in stages, aiming to inject the acrylic resin composition in an amount larger than an injection volume of the resin composition, which is determined based on a maximum estimated gap thickness and the area of the region to be injected.

Subsequently, each test body was left to stand for one day at room temperature, to allow the acrylic resin composition infiltrated into the interior of the injection hole 14 and between the plate 11 and the ceiling base material 12 to be cured, to form the cured body 15 of the acrylic resin composition. In this manner, the repair of the plaster ceiling 10 was carried out.

### [Evaluation of Repaired Plaster Ceiling]

For evaluation, the adhesion strength between the plate 11 and the ceiling base material 12 was measured, in each of the test bodies of the plaster ceiling. The measurement of the adhesion strength between the plate 11 and the ceiling base material 12 was also carried out in a plaster ceiling, as a Comparative Example, in which the cured body 15 of the acrylic resin composition had not been formed in accordance with the repairing method of the present embodiment.

The adhesion strength was measured using a tensile tester (TECHNOTESTER, manufactured by Good Co., Ltd.) authorized by Japan Society for Finishings Technology.

As a result, it has been found out that, in each of the test bodies of the plaster ceiling in which the gap and the peripheral portion thereof were sufficiently filled with the acrylic resin composition and the resin cured body was partially formed, the ceiling was reinforced due to the formation of the cured body 15 of the acrylic resin composition at the gap portion. Such reinforcement was observed even at a portion where the gap thickness was as large as about 2 mm, and the adhesion strength between the plate 11 and the ceiling base material 12 was reduced to an extremely low level. The results have revealed that a peeling strength in each of the test bodies repaired by the repairing method according to the present disclosure is improved about from 67 times to 183 times, as compared to the peeling strength in the ceiling of the Comparative Example, for which the present method has not been used. This indicates that the adhesion strength between the plate 11 and the ceiling base material 12 at the repaired site in the plaster ceiling can be markedly improved by carrying out the repairing method according to the present disclosure.

Further, since the repairing method of Example 1 enables to perform a repair from the side which does not affect the appearance, for example, from a back side of the ceiling, it has been confirmed that there is no difference in the appearance between the ceiling before and after the repair, namely, that the use of the present method does not affect the appearance of the plaster ceiling.

As described above, the repairing method according to the present disclosure allows for performing a repair or reinforcement without affecting the appearance, unless a subject to be repaired is a ceiling having cracks or the like extending to an outermost layer thereof.

Further, even in the case of a plaster ceiling which includes a wire mesh provided so as to extend across the plates, as previously described, the present method allows for repairing the ceiling without affecting the appearance, in the same manner. This is because, since the plaster which has infiltrated through the wire mesh to the back side of the ceiling forms a rough surface, and the repair utilizing the cured body of acrylic resin can be performed on the rough surface.

### (2) Example 2

The same procedure as in the above described Example 1 was repeated, except that an equal mixture of white fibers and bleached fibers for plastering was used instead of the lye-treated straw fibers, in the preparation of the plaster material for forming the ceiling finishing material, to prepare each of a plurality of plaster ceiling material test bodies.

Since white fibers and bleached fibers for plastering were used in the plaster material for forming the finishing material, the resulting plaster ceiling material test bodies of Example 2 had a better appearance as compared to the plaster ceiling material test bodies used in Example 1.

The white fibers for plastering are those obtained by cutting sisal hemp fibers, and the bleached fibers for plastering are those obtained using plant fibers such as jute and kenaf as raw materials. The bleached fibers are usually prepared using waste materials of jute bags for grains and the like, and by bleaching and cutting fibers constituting the jute bags.

The resulting plaster ceiling material test bodies were each repaired in the same manner as in Example 1.

### [Evaluation of Repaired Plaster Ceiling]

In Example 2, as well, it has been found out that the peeling strength in each of the test bodies repaired by the repairing method according to the present disclosure is improved about from 67 times to 183 times, as compared to the peeling strength in the ceiling of the Comparative Example for which the present method has not been used, in the same manner as in Example 1. The results have revealed that the adhesion strength between the plate and the ceiling base material at the repaired site in the plaster ceiling can be markedly improved by carrying out the repairing method according to the present disclosure.

Further, it has been confirmed that there is no difference in the appearance between the ceiling before and after the repair, namely, that the use of the repairing method of Example 2 also does not affect the appearance of the plaster ceiling.

The disclosure of Japanese Patent Application No. 2016-150662 filed on July 29, 2016 is incorporated herein by reference in their entirety. All publications, patent applications, and technical standards mentioned in the present specification are incorporated herein by reference to the same extent as if such individual publication, patent application, or technical standard was specifically and individually indicated to be incorporated by reference.

## Claims

1. A method of repairing a plaster ceiling having plates bridged across joists and spaced apart from each other, a ceiling base material applied to a surface formed from the plates with a masonry trowel from a bottom side, and a ceiling finishing material formed over a lower surface of the ceiling base material, the method comprising:
drilling an injection hole extending from an upper surface of one of the plates to an interface between the one of the plate and the ceiling base material;
injecting an acrylic resin composition containing at least one monomer selected from the group consisting of an acrylic monomer and a methacrylic monomer, a thermosetting resin, and a curing agent, through the injection hole into the interface between the one of the plates and the ceiling base material; and
adhering the one of the plates and the ceiling base material by curing the acrylic resin composition.

2. A method of repairing a plaster ceiling having plates bridged across joists and spaced apart from each other, a ceiling base material applied to a surface formed from the plates with a masonry trowel from a bottom side, and a ceiling finishing material formed over a lower surface of the ceiling base material, the method comprising:
drilling an injection hole extending from an upper surface of one of the plates to an interface between the ceiling base material and the ceiling finishing material;
injecting an acrylic resin composition containing at least one monomer selected from the group consisting of an acrylic monomer and a methacrylic monomer, a thermosetting resin, and a curing agent, through the injection hole into the interface between the ceiling base material and the ceiling finishing material; and
adhering the ceiling base material and the ceiling finishing material by curing the acrylic resin composition.

3. A method of repairing a plaster ceiling having plates bridged across joists and spaced apart from each other, a ceiling base material applied to a surface formed from the plates with a masonry trowel from a bottom side and having a penetrating portion extending from a lower surface of one of the plates through a gap between a plurality of the plates up to an upper surface of the one of the plates, and a ceiling finishing material formed over a lower surface of the ceiling base material, the method comprising:
injecting an acrylic resin composition containing at least one monomer selected from the group consisting of an acrylic monomer and a methacrylic monomer, a thermosetting resin, and a curing agent, into an interface between the one of the plates and the ceiling base material, through a gap between a side face of the one of the plates and the ceiling base material that is stuffed in the gap between a plurality of the plates up to an upper surface of the plate; and
adhering the one of the plates and the ceiling base material by curing the acrylic resin composition.

4. A method of repairing a plaster ceiling having plates bridged across joists and spaced apart from each other, a wire mesh provided so as to extend across the plates, and a ceiling finishing material formed over a lower surface of the wire mesh, the method comprising:
applying an acrylic resin composition containing at least one monomer selected from the group consisting of an acrylic monomer and a methacrylic monomer, a thermosetting resin, and a curing agent, to the wire mesh from an upper side to introduce the acrylic resin composition into an interface between the wire mesh and the ceiling finishing material; and
adhering the wire mesh and the ceiling finishing material by curing the acrylic resin composition.

5. A method of repairing a plaster ceiling having plates bridged across joists and spaced apart from each other, a wire mesh provided so as to extend across the plates, and a ceiling finishing material formed over a lower surface of the wire mesh, the method comprising:
providing a new wire mesh so as to extend across upper surfaces of the plates;
applying an acrylic resin composition containing at least one monomer selected from the group consisting of an acrylic monomer and a methacrylic monomer, a thermosetting resin, and a curing agent, to an upper surface of the new wire mesh; and
adhering the new wire mesh, the wire mesh provided so as to extend across upper surfaces of the plates and the ceiling finishing material by curing the acrylic resin composition.

6. A method of repairing a plaster wall, the method comprising:
drilling an injection hole at a site of the plaster wall to be repaired, which has: a base material; an intermediate coating material applied with a masonry trowel on the base material; and a surface material applied with a masonry trowel on the intermediate coating material, wherein the injection hole is extended from the base material through the intermediate coating material to an interface between the intermediate coating material and the surface material;
injecting an acrylic resin composition containing at least one monomer selected from the group consisting of an acrylic monomer and a methacrylic monomer, a thermosetting resin, and a curing agent, into the interface between the intermediate coating material and the surface material; and
adhering the interface between the intermediate coating material and the surface material by curing the acrylic resin composition.
